# EUROPEAN PATENT SPECIFICATION

(11) **EP 1 262 597 B1**
(45) Date of publication and mention of the grant of the patent: **29.07.2009**
(21) Application number: 02077191.1
(22) Date of filing: 31.05.2002
(51) Int. Cl.: E01B 7/24

(54) **Method and system for heating of rail and railelement for use therewith**
Verfahren und System zur Erwärmung von Schienen und Schienen zu dieser Verwendung
Procédé et système de chauffage pour rails de chemin de fer et rail pour cette utilisation

(30) Priority: 01.06.2001 NL 1018204
(43) Date of publication of application: 04.12.2002
(73) Proprietor: Movares Nederland B.V., 3511 SX Utrecht (NL)
(72) Inventor: Verbon, Frederikus Philipus Maria, 3992 NX Houten (NL)
(74) Representative: Van Breda, Jacobus

(56) References cited:
- EP-A- 0 247 693
- DE-A- 3 037 721
- DE-B- 1 277 290
- FR-A- 1 422 242
- PATENT ABSTRACTS OF JAPAN vol. 004, no. 013 (M-090), 30 January 1980 (1980-01-30) -& JP 54 149104 A (MITSUBISHI ELECTRIC CORP), 22 November 1979 (1979-11-22)
- DATABASE WPI Section PQ, Week 199405 Derwent Publications Ltd., London, GB; Class Q14, AN 1994-042195 XP002184200 -& SU 1 788 117 A (AS USSR TECH MECH INST) , 15 January 1993 (1993-01-15)

## Description

It is known that heating of switch points has the function of enabling the points to switch without problem during wintery conditions, i.e. the sticking together of components as a result of being frozen is prevented; similar problems can occur as a result of snow and/or drift snow.

In a known so-called gas burner pipe installation a burner pipe is mounted on a side wall of a rail, wherein the burner pipe is provided with gas radiators or so-called burner holders by which the rail is heated.

In the central pipe system liquid is heated for instance by means of a gas burner installation, and transported to one or more switch points against which a round pipe is clamped which must provide the heat transfer from the liquid in the pipe to the rail.

In the electrical heating system an electrical heating element is mounted against a side wall of the web of the rail, which heating element transfers the electrically generated heat to the rail.

Known from the publication of European application EP 0 247 693 A2 is a heating method for heating railway points by applying a warm liquid which is carried along the rail element, wherein heat transfer takes place between the liquid and the rail element.

Patent abstracts of Japan Vol. 004, no. 013 & JP 54/149104 teach a method and device for heating a rail element, wherein heat guiding means arrange for the transfer of heat between liquid in a ground supporting the rail element and said rail element.

In order to improve such a method the present invention provides a method for heating and/or cooling a rail element, according to claim 10, wherein heating liquid is carried along a channel guiding the liquid during transfer of the heat to or from the rail element, which channel is provided at least partly against at least an upright part of the rail element so as to cause that heat transfer takes place between the liquid and cause that heat transfer takes place between the liquid and the rail element, characterized in that the relatively high temperature or low temperature of the liquid is obtained by extracting heat respectively cold from the ground by arranging pipes for the liquid in the ground.

The heat to be extracted from the ground can also be carried to the rails via a heat exchanger. The temperature of the liquid can moreover be raised (or lowered) if necessary by means of a heat pump.

Since use is preferably made of liquid of a relatively low temperature, for instance lower than 80 DEG C - this being a common temperature in known systems - the present invention further provides a method for transferring heat from a liquid to a rail element, wherein the heat-exchanging surface between the liquid and the rail element is optimized by guiding the liquid through a channel having one or more walls in heat-conducting contact with the rail element. In addition to having a rectangular cross-sectional form, such a channel can likewise be of round, oval or other form, such as one or more flexible hoses adjacent to each other.

Owing to this method according to the present invention a considerable improvement in heat transfer is obtained, whereby the temperature of the liquid can remain low. This method can of course also be advantageous in known systems without terrestrial heat, and the power to be added by conventional energy sources can be limited.

The present invention further provides a system for transferring terrestrial heat to a rail element, in accordance with claim 1. Using such a system the rails or other rail elements can also be cooled during the summer with cold liquid from the ground, whereby disruption and noise can be reduced, for instance by condensation on the rail.

The present invention will be elucidated on the basis of the following description of a preferred embodiment thereof, with reference to the annexed figures, in which:
Fig. 1 shows a top view in perspective of a rail element according to a first preferred embodiment of the present invention;
Fig. 2A-2D respectively show views, partly in cross-section and partly in perspective, of possible variants of detail II of fig. 1;
Fig. 3 shows a schematic view, partly in perspective and partly in cross-section, of a first preferred embodiment of a method and system according to the present invention;
Fig. 4 shows a schematic view, partly in perspective and partly in cross-section, of a second preferred embodiment of the method and system according to the present invention;

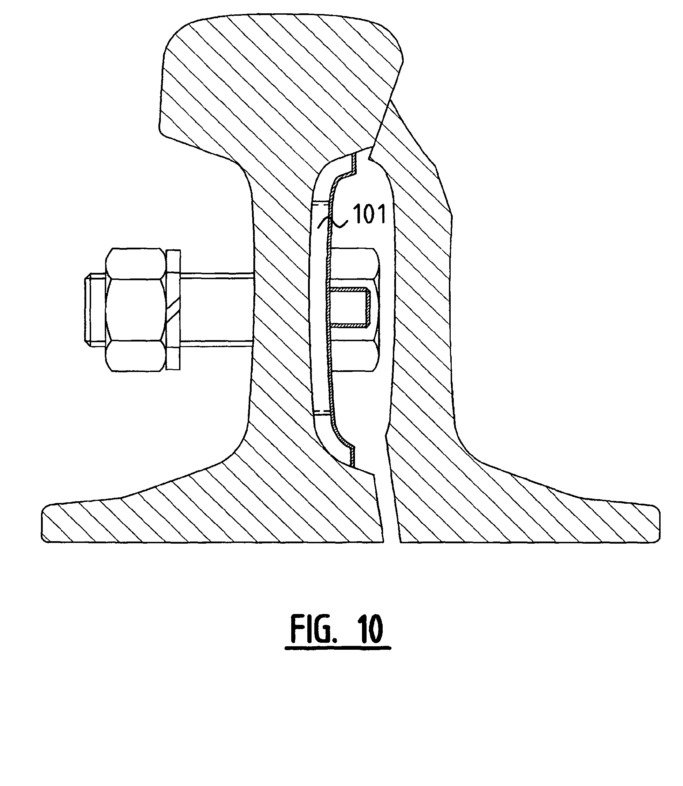

Fig. 5-14 show views in cross-section of further variants of a rail element for use in a system and method according to the present invention; and
Fig. 15-16 show schematic views of further embodiments of the system and method according to the present invention;
Fig. 17 is a cross-section of a further variant of a rail element for use in an embodiment of a system and method according to the present invention.

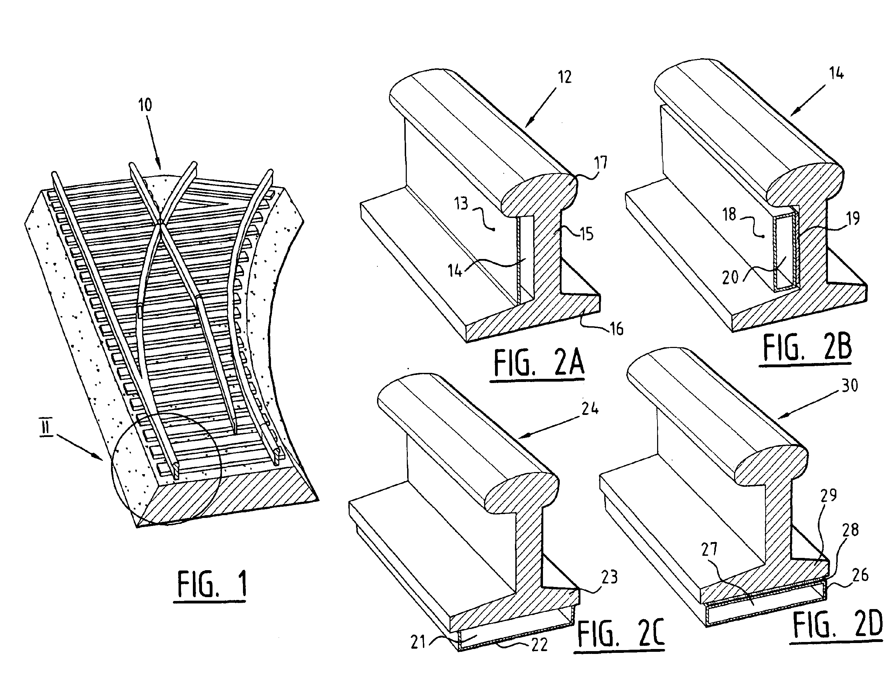

In a switch point 10 as shown schematically in fig. 1 provisions have to be made for heating thereof, so that operation of the switch point remains possible in winter conditions. In a first rail 12 according to the preferred embodiment of the present invention, space 14 is created using a plate 13 where an upright part 15 extends between a base 16 and a head of the rail 17.

This space 14 can be used for through-flow of a liquid which is heated for instance to a temperature of +5°C to about 60°C, which is for instance considerably lower than the presently usual temperature of about 80°C, owing to the large exchange surface of the liquid and the rail.

In the rail 11 according to fig. 2B an elongate channel 18 is fixed to the upright part in heat-conducting manner, for instance using paste 19 or by means of welding or the like, in order to obtain good heat transfer between the liquid in channel 20 and the rail.

In the embodiment according to fig. 2C a channel 21 is created by a tubular part 22 of U-shaped cross-section, whereby the channel has a wall in common with a base 23 of a rail 24.

In similar manner to the embodiment according to fig. 2B, an elongate channel 26 with a relatively long wall 27 is fixed in the embodiment of fig. 2D to a base 29 of rail 30 using heat-conducting paste or welds.

It can be advantageous for heat-conducting paste to be used which preferably remains elastic during the period of use, which can be many years. An advantage compared to a number of types of paste which become hard is that, when applied in rails, hardened paste will start to crack due to vibrations, and cracks are heat-insulating. A mass which remains homogenous will continue to conduct heat well.

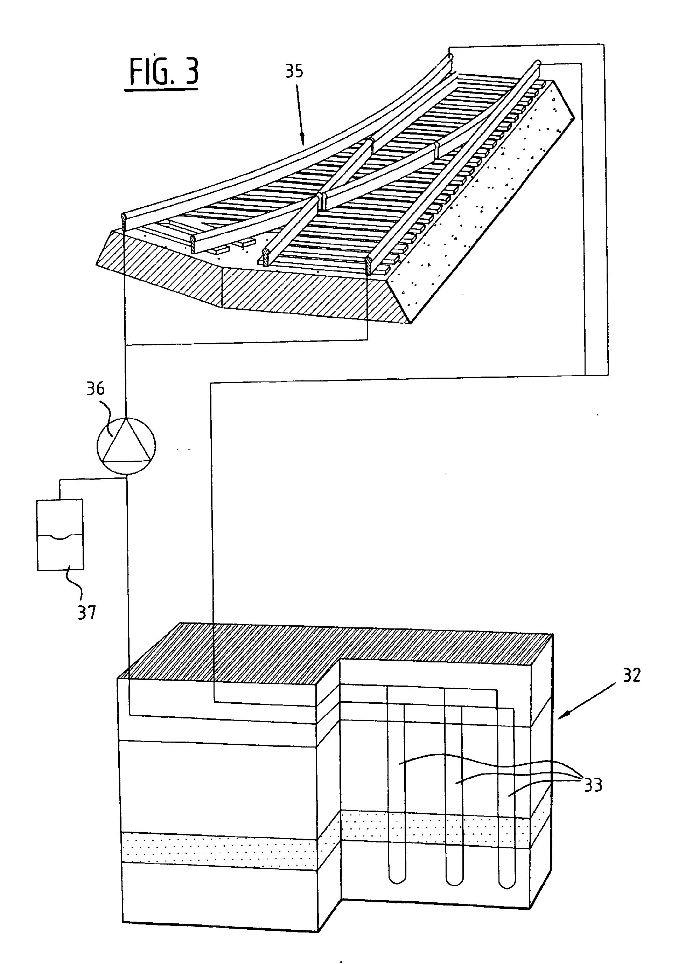

In an embodiment of the method and the system according to the present invention (fig. 3), the channels shown in any of the fig. 2A-2D are connected to a conduit system 32, a considerable part of which extends over a determined depth in the ground, for instance via loops 33, in order to guide liquid of for instance 5 or 10°C along the switch point 35, also in winter conditions, using pump 36 and reservoir 37.

It is further conceivable in summer conditions to heat the water using the hot rails and store it in the ground in anticipation of possible later wintery conditions, in order to then be able to heat the rails even better with the heated water. In this manner the rail elements are also cooled during the summer, whereby malfunctions resulting from expansion are prevented.

A further developed system 41 according to the present invention, a so-called mini-doublet, comprises, in addition to supply source 42 and return source 43 and diverse valves and three-way valves not designated with reference numerals, a heat exchanger 44 to one side of which are connected the primary circuit with supply source 42 and return source 43 of the monosource and a pump 45, and to the other side of which are connected a secondary circuit with pump 47 and the conduits to the rails of a switch point 48. Also included in this circuit is a heat pump 49 which, depending on the dimensioning and/or conditions such as outside temperature, can bring about an increase in the temperature of the water in the channels along rail elements 48 and other movable rail elements such as switch blades and/or crossing frogs.

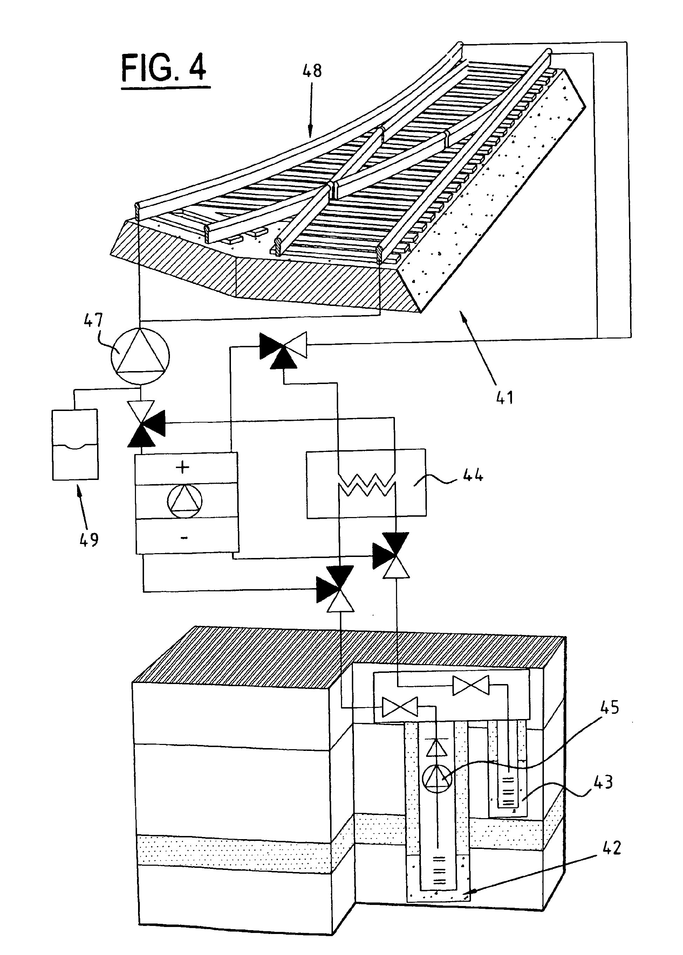

In contrast to existing systems a much more advanced control can be applied, particularly in the preferred embodiment according to fig. 4, than the now usual ON/OFF control for gas burners and the like.

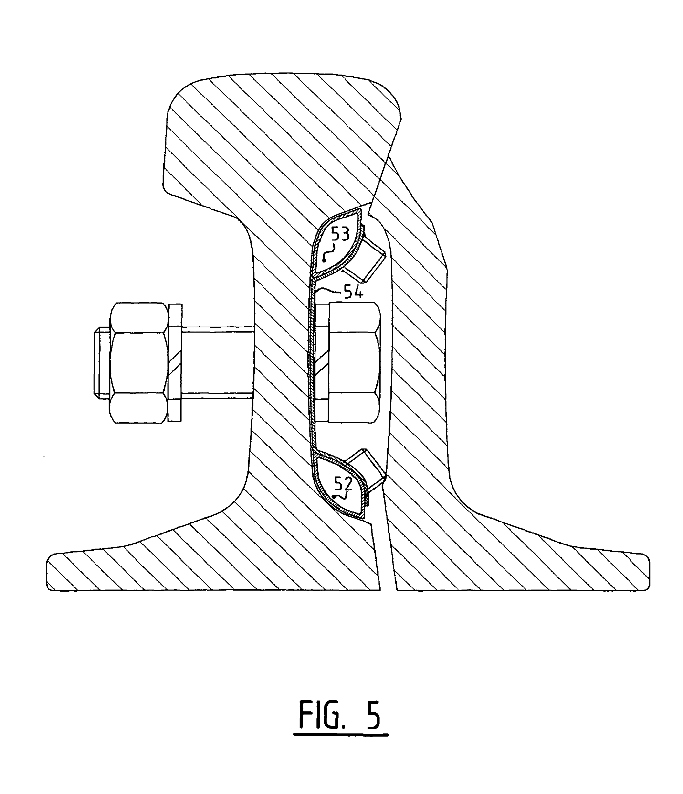

In the preferred embodiment according to fig. 5 two pipes or hoses 52, 53 with a form adapted to the rail element are arranged there against using a fitting piece 54.

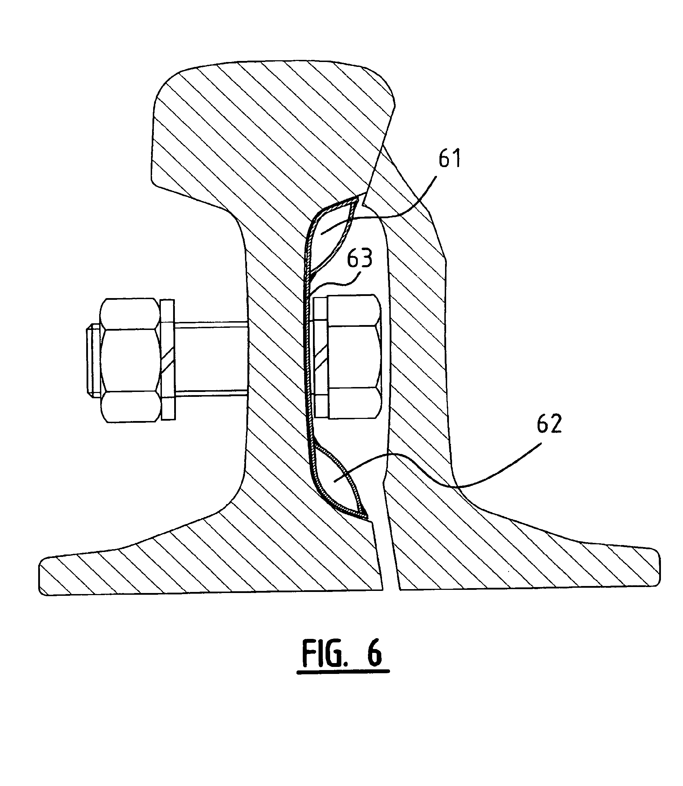

In the embodiment of fig. 6 two channels 61, 62 of close-fitting form are mutually connected by a connecting piece 63.

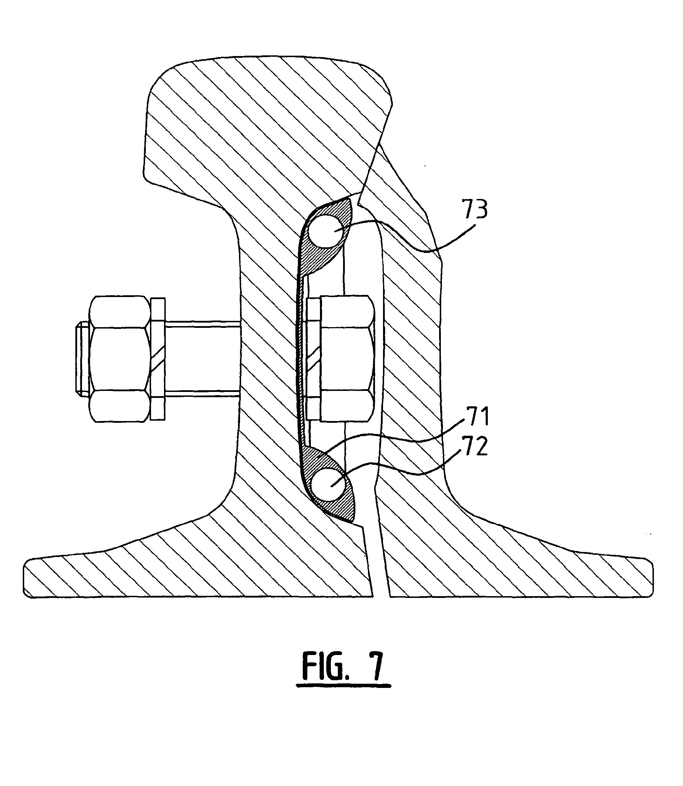

In the embodiment according to fig. 7 a part 71 which is relatively easy to manufacture is provided with two internal channels 72 and 73 for the liquid.

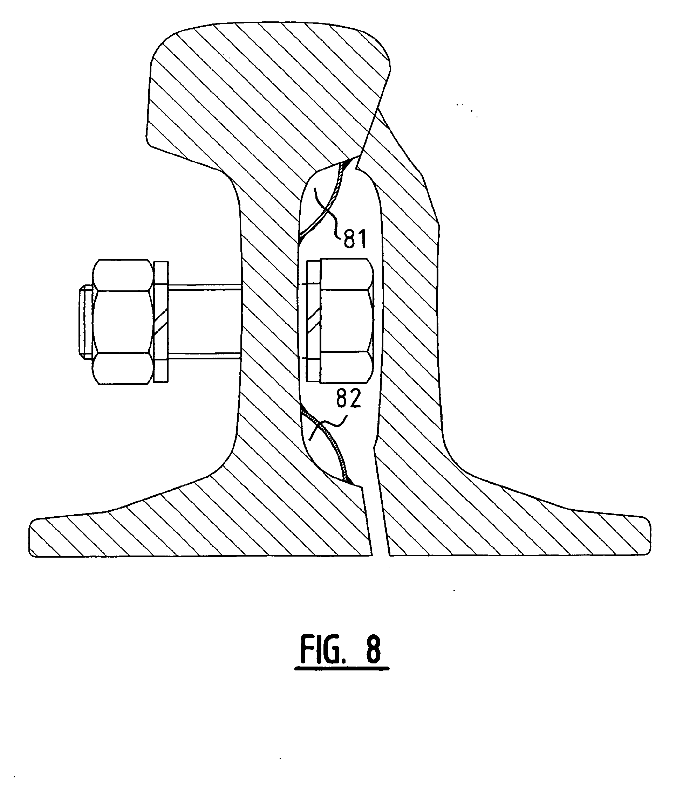

In the embodiment of fig. 8 the channels 81 and 82 are formed by welding close-fitting elements to a rail so that the liquid is in direct contact with the rail.

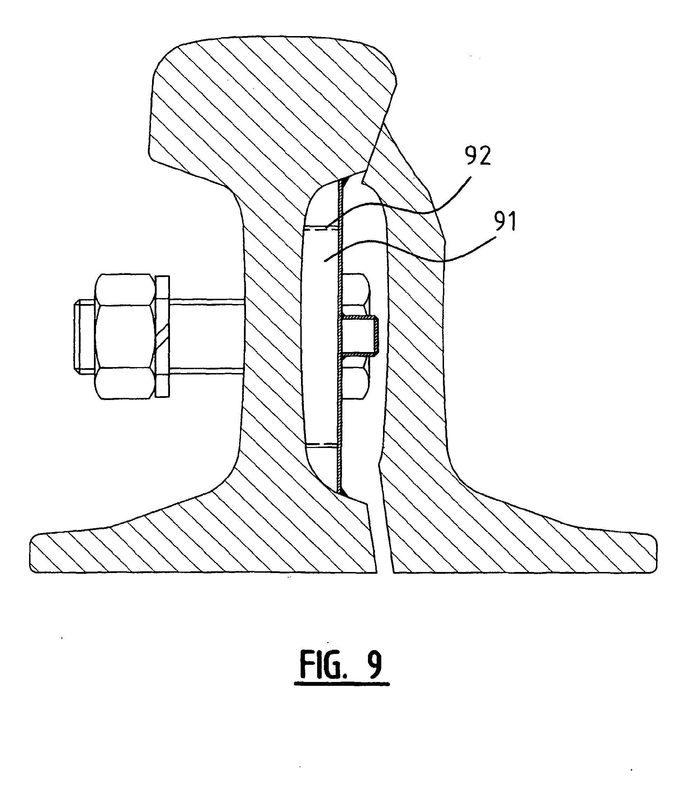

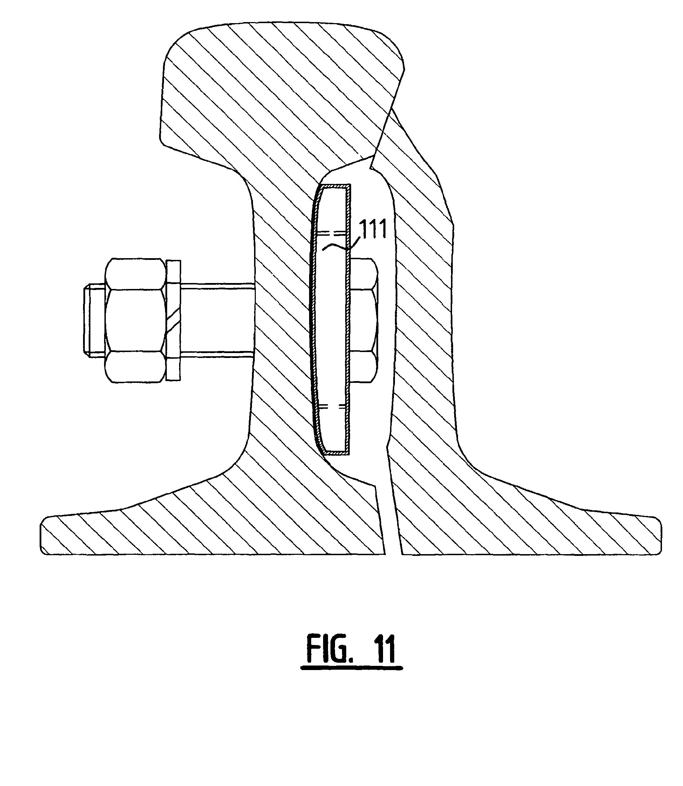

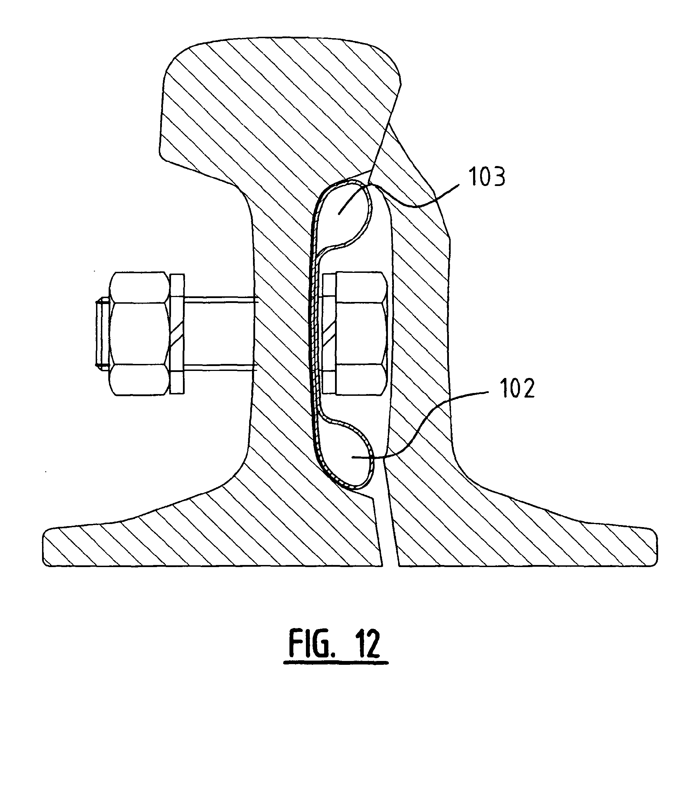

In the embodiment according to fig. 9 a relatively large channel is provided owing to a plate 92 which is welded to the top and bottom side of the rail. Owing to the form of plate 101 the efficiency thereof per quantity of liquid is increased. The channel 111 according to fig. 11 can also be fixed to a rail in simple manner. Channels 102 and 103 of fig. 12 can be manufactured in relatively simple manner.

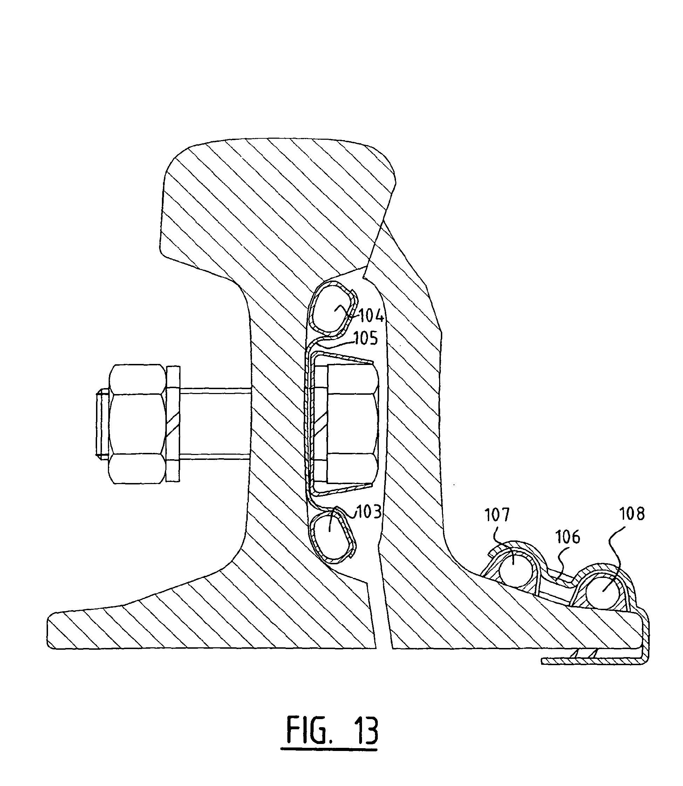

In the embodiment according to fig. 13 pipes or hoses 103, 104 can be readily fixed to rail using a fitting piece 105. A special fitting piece 106 is also arranged on the base of the rail to accommodate channels 107, 108.

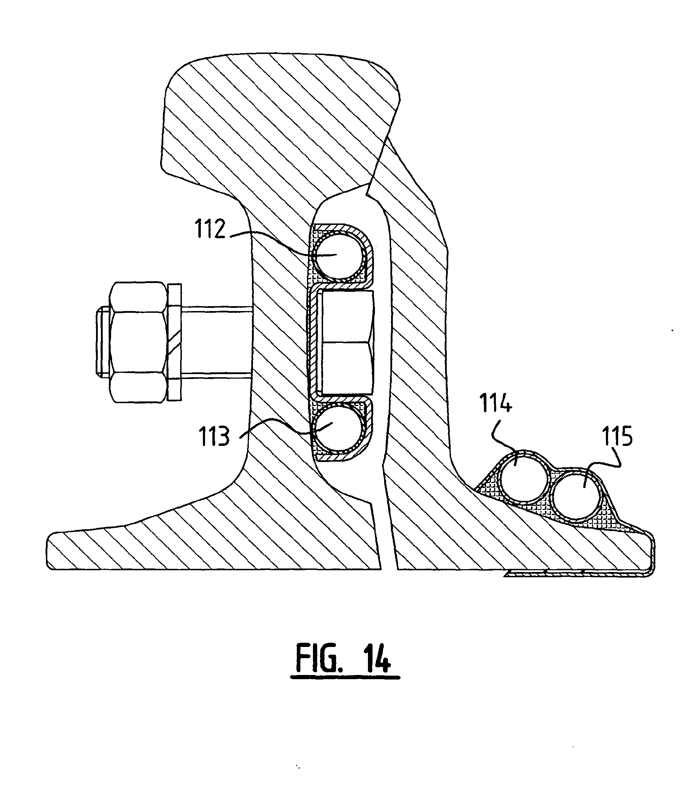

In the embodiment according to fig. 14 the channels 112, 113, 114, 115 are in any case of approximately round shape. Pipes are also arranged on the base of the switch blade of the switch point, which enhances heating thereof, particularly in the case that the switch blade in question does not make contact with the rest of the main pipe of the switch point due to the position of the switch point.

In the above described embodiments it is recommended that the pipes are manufactured from a good conducting material at the position of the rails. This material is preferably a metal, wherein copper for instance has very good conducting properties and stainless steel for instance has excellent durability. Other metals or alloys can also be applied.

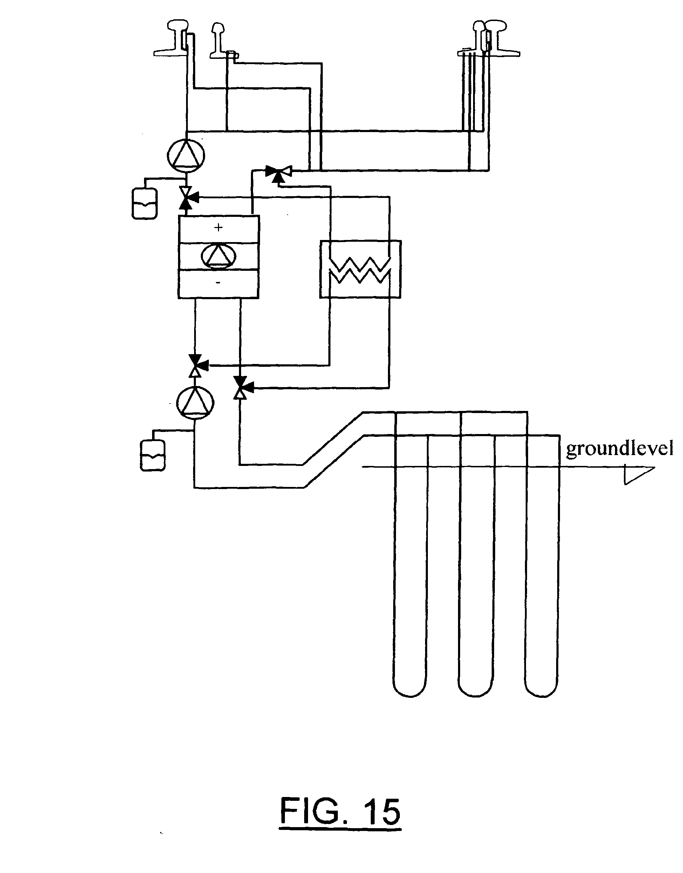

The embodiment according to fig. 15 comprises a ground loop with heat pump and heat exchanger.

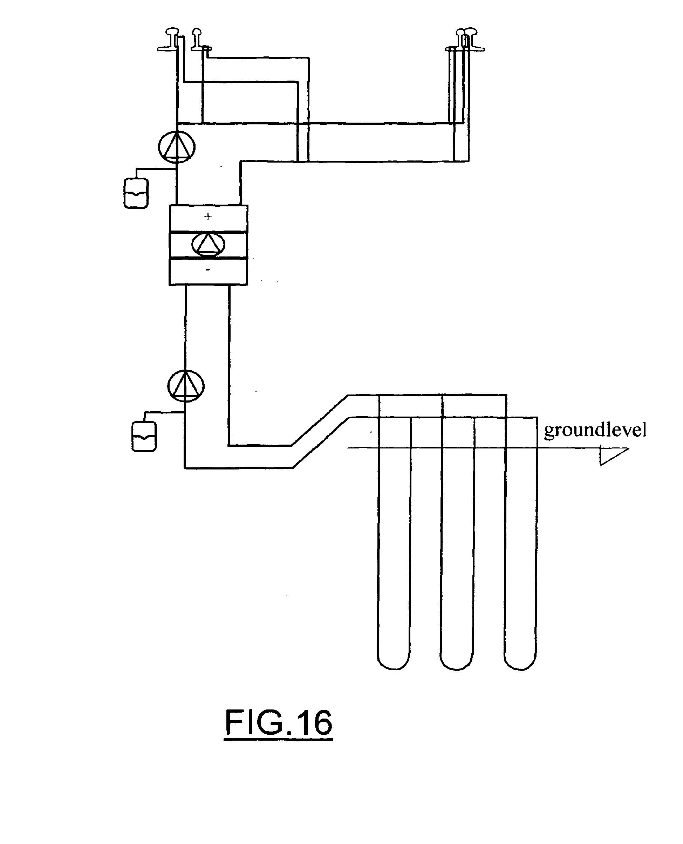

The embodiment according to fig. 16 is relatively simple in that it comprises a ground loop with heat pump having a relatively small number of components such as connectors and the like.

The embodiment according to fig. 16 can be applied in a ground loop with heat exchanger and cooling agent, whereby higher temperatures differences can be achieved through evaporation and condensation thereof.

In the embodiment in which heat is extracted from the ground using one or more closed ground loops filled with a cold agent, this cold agent will begin to boil at relatively low temperature through pressure reduction on the primary side of the heat pump, whereby the pump will extract evaporation heat from the ground. On the secondary side of the heat pump the temperature of the liquid to the rail element will be increased.

At the time of filing of the present invention work is still being done on the further development of the heating of movable rail elements such as crossing frogs and switch blades of switch points. It should however be apparent that the above described preferred embodiments can also be applied to such components of a rail system.

Application of improved heat pumps which enable heating of water to 80 to 85° improves the temperature transfer even further.

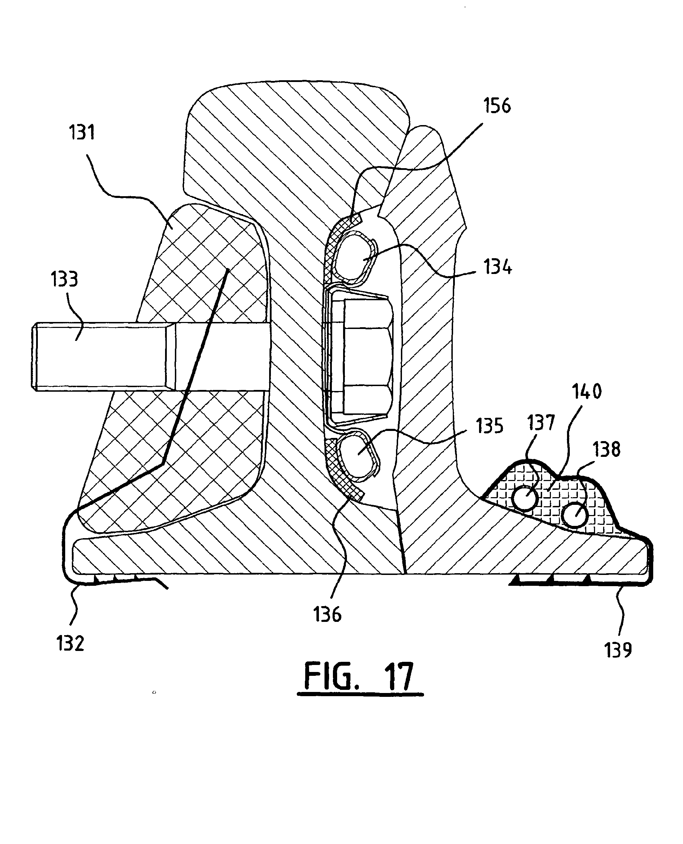

In order to prevent heat losses from rail elements, a further embodiment (fig. 17) is provided with insulation means 131 which are fixed to the rail element by means of spring means 132. An alternative method of fixing the insulation means 131 to the rail element is the use of bolt 133. This bolt 133 is used in the first instance to fix channels 134 and 135. For heat conduction of these channels 134 and 135 use is made of thermal paste 136, whereby the heat of the liquid is conducted well to the rail element. This embodiment is further provided with liquid channels 137 and 138 which are fixed to the switch blade of the point by means of clamping spring 139. A heat-conducting paste 140 is likewise applied here.

There is the further possibility (not shown) of heat insulation being arranged over the liquid-carrying pipes of all embodiments. This has the advantage that heat is supplied in very specific manner to the rails and that heat losses are prevented, even while the heat is still located in the supply to the rails.

The embodiments are very practicable and can be installed in existing rail and switch point systems.

The present invention is not limited to the above described preferred embodiments thereof; the rights sought are defined by the following claims, within the scope of which many modifications can be envisaged.

## Claims

1. System for heating or cooling a rail (11, 12, 24, 30) element, comprising said rail element and liquid guiding means that comprise a channel (14, 20, 21, 27) having one or more walls in heat-conductive contact with the rail element for the transfer of heat between the liquid and the rail element (11, 12, 24, 30), **characterized in that,** said channel (14, 20, 21, 27) connects to a conduit system (32), a part of which extends over a predetermined depth in the ground, whereby the channel and said conduit system (32) guide said liquid, so as to cause that heat respectively cold is extracted from the ground supporting said rail element.

2. System according to claim 1, **characterized in that,** the channel (14, 20) is fixed to an upright part of the rail element.

3. System according to claim 2, **characterized in that** the channel (21, 27) is fixed to a base (23, 29) of the rail element (24, 30).

4. System according to any one of claims 1-3, **characterized in that,** the rail element (11, 12, 24, 30) forms one of the walls of the channel.

5. System according to one the previous claims, **characterized in that**, a pump (36) is provided for the transfer of the liquid through the conduit system (32).

6. System according to any one of claims 1-5, **characterized in that** it comprises a heat pump (49) in order to bring about an increase in the temperature of the liquid in the channels in addition to the heat absorbed from the ground.

7. System according to any one of claim 1-6, **characterized in that** the channels are embodied as pipes or hoses (52, 53) with a form adapted to the rail element.

8. System according to any one of claims 1-7, **characterized in that** the channels are fixed to the upright part of the rail element by use of paste (19) or welding to promote good heat transfer between the liquid in the channel (20) and the rail element.

9. System according to any one of claims 1-8, **characterized in that** the web of the rail element and/or the channels and/or the conduit system is provided with insulation means.

10. Method for heating and/or cooling a rail (11, 12, 24, 30) element, wherein heating liquid is carried along a channel (14, 20, 21, 27) guiding the liquid during transfer of the heat to or from the rail element, which channel is provided at least partly against at least an upright part (14, 20) of the rail element so as to cause that heat transfer takes place between the liquid and the rail element, **characterized in that** the relatively high temperature or low temperature of the liquid is obtained by extracting heat respectively cold from the ground by arranging pipes (33) for the liquid in the ground.

11. Method as claimed in claim 10, wherein groundwater is pumped up to obtain the liquid of relatively high temperature.

12. Method as claimed in claim 10 or 11, wherein the heat extracted from the ground is transferred to the liquid via a heat exchanger (44).

13. Method as claimed in any of the claims 10-12, wherein use is made of a heat pump (49) to increase (or decrease) the temperature of the liquid.

14. Method according to any one of claims 10-13, wherein the heat-exchanging surface between the liquid and the rail element is optimized by guiding the liquid through a channel (14, 20, 21, 27) having one or more walls in heat-conducting contact with the rail (11, 12, 24, 30) element.

15. Method as claimed in claim 14, wherein at least one wall of the channel is formed by the rail element itself.

16. Method as claimed in claim 14, wherein a pipe of substantially elongate cross-section is fixed along at least one long side thereof in heat-conducting manner to the rail element.

17. Method as claimed in one or more of the foregoing claims 10-16, wherein insulation means are applied to prevent loss of heat energy from the rail element.

18. Method as claimed in claim 17, wherein the insulation means are arranged substantially along the web of the rail element.

19. Method as claimed in one or more of the claims 10-18, wherein for cooling purposes relatively cool liquid is extracted from the ground, to which cool liquid heat is supplied from hot rails.

20. Method as claimed in claim 19, wherein this heated ground liquid is fed back again to the ground to be pumped up again later for reuse of the heat.

## Patentansprüche

1. System zum Beheizen oder Kühlen eines Schienen-(11, 12, 24, 30) -Elements, aufweisend das Schienenelement und Flüssigkeitsleitungsmittel, die einen Kanal (14, 20, 21, 27) mit einer oder mehreren Wänden in Wärmeleitkontakt mit dem Schienenelement für die Übertragung von Wärme zwischen der Flüssigkeit und dem Schienenelement (11, 12, 24, 30) aufweisen, **dadurch gekennzeichnet, dass** der Kanal (14, 20, 21, 27) an ein Leitungssystem (32) angeschlossen ist, wobei sich ein Teil desselben über eine vorbestimmte Tiefe im Boden erstreckt, wobei der Kanal und das Leitungssystem (32) die Flüssigkeit leiten, so dass bewirkt wird, dass Wärme beziehungsweise Kälte aus dem Boden, der das Schienenelement abstützt, extrahiert werden.

2. System gemäß Anspruch 1, **dadurch gekennzeichnet, dass** der Kanal (14, 20) an einem aufrechten Teil des Schienenelements fixiert ist.

3. System gemäß Anspruch 2, **dadurch gekennzeichnet, dass** der Kanal (21, 27) an einer Basis (23, 29) des Schienenelements (24, 30) fixiert ist.

4. System gemäß einem der Ansprüche 1 bis 3, **dadurch gekennzeichnet, dass** das Schienenelement (11, 12, 24, 30) eine der Wände des Kanals bildet.

5. System gemäß einem der vorhergehenden Ansprüche, **dadurch gekennzeichnet, dass** eine Pumpe (36) für das Übertragen der Flüssigkeit durch das Leitungssystem (32) hindurch vorgesehen ist.

6. System gemäß einem der Ansprüche 1 bis 5, **dadurch gekennzeichnet, dass** es eine Wärmepumpe (49) aufweist zum Bewirken einer Erhöhung der Temperatur der Flüssigkeit in den Kanälen zusätzlich zu der aus dem Boden absorbierten Wärme.

7. System gemäß einem der Ansprüche 1 bis 6, **dadurch gekennzeichnet, dass** die Kanäle als Rohrleitungen oder Schläuche (52, 53) mit einer an das Schienenelement angepassten Form ausgebildet sind.

8. System gemäß einem der Ansprüche 1 bis 7, **dadurch gekennzeichnet, dass** die Kanäle an dem aufrechten Teil des Schienenelements durch Verwenden von Klebstoff (19) oder durch Schweißen zum Begünstigen einer guten Wärmeübertragung zwischen der Flüssigkeit in dem Kanal (20) und dem Schienenelement fixiert sind.

9. System gemäß einem der Ansprüche 1 bis 8, **dadurch gekennzeichnet, dass** der Steg des Schienenelements und/oder die Kanäle und/oder das Leitungssystem Isolationsmittel aufweisen.

10. Verfahren zum Beheizen und/oder Kühlen eines Schienen- (11, 12, 24, 30) -Elements, wobei Heizflüssigkeit entlang einem Kanal (14, 20, 21, 27) mitgeführt wird, der die Flüssigkeit während der Übertragung der Wärme zu dem Schienenelement oder von diesem wegleitet, wobei der Kanal zumindest teilweise an mindestens einem aufrechten Teil (14, 20) des Schienenelements vorgesehen ist, so dass bewirkt wird, dass Wärmeübertragung zwischen der Flüssigkeit und dem Schienenelement stattfindet, **dadurch gekennzeichnet, dass** die relativ hohe Temperatur oder niedrige Temperatur der Flüssigkeit durch Extrahieren von Wärme beziehungsweise Kälte aus dem Boden durch Anordnen von Rohrleitungen (33) für die Flüssigkeit im Boden erhalten wird.

11. Verfahren gemäß Anspruch 10, wobei Grundwasser hochgepumpt wird zum Erhalten der Flüssigkeit mit relativ hoher Temperatur.

12. Verfahren gemäß Anspruch 10 oder 11, wobei die aus dem Boden extrahierte Wärme über einen Wärmetauscher (44) auf die Flüssigkeit übertragen wird.

13. Verfahren gemäß einem der Ansprüche 10 bis 12, wobei eine Wärmepumpe (49) verwendet wird zum Erhöhen (oder Verringern) der Temperatur der Flüssigkeit.

14. Verfahren gemäß einem der Ansprüche 10 bis 13, wobei die Wärmetauschfläche zwischen der Flüssigkeit und dem Schienenelement durch Leiten der Flüssigkeit durch einen Kanal (14, 20, 21, 27) optimiert wird, der eine oder mehrere Wände in Wärmeleitkontakt mit dem Schienen-(11, 12, 24, 30) -Element aufweist.

15. Verfahren gemäß Anspruch 14, wobei mindestens eine Wand des Kanals von dem Schienenelement selbst ausgebildet wird.

16. Verfahren gemäß Anspruch 14, wobei eine Rohrleitung mit einem im Wesentlichen länglichen Querschnitt entlang zumindest einer langen Seite davon wärmeleitend an dem Schienenelement befestigt ist.

17. Verfahren gemäß einem oder mehreren der vorhergehenden Ansprüche 10 bis 16, wobei Isolationsmittel verwendet werden zum Verhindern des Verlustes von Wärmeenergie aus dem Schienenelement.

18. Verfahren gemäß Anspruch 17, wobei die Isolationsmittel im Wesentlichen entlang dem Steg des Schienenelements angeordnet werden.

19. Verfahren gemäß einem oder mehreren der Ansprüche 10 bis 18, wobei relativ kühle Flüssigkeit zu Kühlzwecken aus dem Boden extrahiert wird, wobei der kühlen Flüssigkeit Wärme aus heißen Schienen zugeführt wird.

20. Verfahren gemäß Anspruch 19, wobei die erwärmte Bodenflüssigkeit zum späteren erneuten Hochpumpen für die Wiederverwendung der Wärme wieder in den Boden zurückgeführt wird.

## Revendications

1. Système pour chauffer ou refroidir un élément de rail (11, 12, 24, 30), comprenant ledit élément de rail et des moyens de guidage de liquide qui comprennent un canal (14, 20, 21, 27) ayant une ou plusieurs parois en contact thermoconducteur avec l'élément de rail pour le transfert de chaleur entre le liquide et l'élément de rail (11, 12, 24, 30), **caractérisé en ce que,** ledit canal (14, 20, 21, 27) est relié à un système de conduite (32), dont une partie s'étend à une profondeur prédéterminée dans le sol, grâce à quoi le canal et ledit système de conduite (32) guident ledit liquide, afin que de la chaleur, du froid respectivement soit extrait du sol supportant ledit élément de rail.

2. Système selon la revendication 1, **caractérisé en ce que**, le canal (14, 20) est fixé à une partie verticale de l'élément de rail.

3. Système selon la revendication 2, **caractérisé en ce que** le canal (21, 27) est fixé à une base (23, 29) de l'élément de rail (24, 30).

4. Système selon l'une quelconque des revendications 1 à 3, **caractérisé en ce que**, l'élément de rail (11, 12, 24, 30) forme l'une des parois du canal.

5. Système selon l'une quelconque des revendications précédentes, **caractérisé en ce qu'**une pompe (36) est prévue pour le transfert du liquide à travers le système de conduite (32).

6. Système selon l'une quelconque des revendications 1 à 5, **caractérisé en ce qu'**il comprend une pompe à chaleur (49) afin d'obtenir une augmentation de la température du liquide dans les canaux en plus de la chaleur absorbée à partir du sol.

7. Système selon l'une quelconque des revendications 1 à 6, **caractérisé en ce que** les canaux sont sous la forme de tubes ou tuyaux (52, 53) ayant une forme adaptée à l'élément de rail.

8. Système selon l'une quelconque des revendications 1 à 7, **caractérisé en ce que** les canaux sont fixés à la partie verticale de l'élément de rail par l'utilisation d'une colle (19) ou par soudure pour favoriser un bon transfert de chaleur entre le liquide dans le canal (20) et l'élément de rail.

9. Système selon l'une quelconque des revendications 1 à 8, **caractérisé en ce que** l'âme de l'élément de rail et/ou les canaux et/ou le système de conduite est muni de moyens d'isolation.

10. Procédé pour chauffer et/ou refroidir un élément de rail (11, 12, 24, 30),
dans lequel le liquide de chauffage est conduit le long d'un canal (14, 20, 21, 27) guidant le liquide pendant le transfert de la chaleur vers ou à partir de l'élément de rail, lequel canal est disposé au moins partiellement contre au moins une partie verticale (14, 20) de l'élément de rail afin que le transfert de chaleur ait lieu entre le liquide et l'élément de rail, **caractérisé en ce que** la température relativement élevée ou relativement basse du liquide est obtenue par extraction de la chaleur, du froid respectivement du sol par agencement de tubes (33) pour le liquide dans le sol.

11. Procédé selon la revendication 10, dans lequel de l'eau souterraine est pompée pour obtenir le liquide à une température relativement élevée.

12. Procédé selon la revendication 10 ou 11, dans lequel la chaleur extraite du sol est transférée au liquide par un échangeur de chaleur (44).

13. Procédé selon l'une quelconque des revendications 10 à 12, dans lequel l'utilisation est faite d'une pompe à chaleur (49) pour augmenter (ou diminuer) la température du liquide.

14. Procédé selon l'une quelconque des revendications 10 à 13, dans lequel la surface d'échange de chaleur entre le liquide et l'élément de rail est optimisée en guidant le liquide à travers un canal (14, 20, 21, 27) ayant une ou plusieurs parois en contact thermoconducteur avec l'élément de rail (11, 12, 24, 30).

15. Procédé selon la revendication 14, dans lequel au moins une paroi du canal est formée par l'élément de rail lui-même.

16. Procédé selon la revendication 14, dans lequel un tube de coupe sensiblement allongée est fixé le long d'au moins un côté long de celui-ci de manière à être thermoconducteur envers l'élément de rail.

17. Procédé selon l'une ou plusieurs des revendications précédentes 10 à 16, dans lequel les moyens d'isolation sont appliqués pour empêcher une perte d'énergie thermique de l'élément de rail.

18. Procédé selon la revendication 17, dans lequel les moyens d'isolation sont agencés sensiblement le long de l'âme de l'élément de rail.

19. Procédé selon l'une ou plusieurs des revendications 10 à 18, dans lequel, dans le but d'un refroidissement, un liquide relativement froid est extrait du sol, auquel liquide froid on apporte de la chaleur provenant des rails chauds.

20. Procédé selon la revendication 19, dans lequel ce liquide de sol chauffé est renvoyé à nouveau au sol afin d'être pompé à nouveau ultérieurement pour une réutilisation de la chaleur.
